# EUROPÄISCHE PATENTANMELDUNG

(11) **EP 2 592 240 A1**
(43) Veröffentlichungstag der Anmeldung: **15.05.2013**
(21) Anmeldenummer: 11008920.8
(22) Anmeldetag: 09.11.2011
(51) Int. Cl.: F01D 25/14, F02C 6/12

(54) **Turbolader-Turbinengehäuse mit Innenisolierung**

(71) Anmelder: ISOLITE GmbH, 67063 Ludwigshafen (DE)
(72) Erfinder: Kroll, Matthias, 67273 Dackenheim (DE); Oberthür, Holger, 67071 Ludwigshafen (DE); Reuss, Thomas, 74196 Neuenstadt Stein (DE); Petters, Jochen, 76137 Karlsruhe (DE)
(74) Vertreter: Grünecker, Kinkeldey, Stockmair & Schwanhäusser

(57) **Zusammenfassung**

Turbolader (10) für einen Verbrennungsmotor, wobei das Turbinengehäuse (11) des Turboladers an seiner Innenwand (12) eine thermische Isolierung (17) aufweist. Die Isolierung (17) besteht vorzugsweise aus einem metallischen Deckblech (19) und mehreren darunter liegenden Isoliermatten oder Isolierschalen.

## Beschreibung

### Gebiet der Erfindung

Die Erfindung betrifft einen Turbolader für Verbrennungsmotoren gemäß dem Oberbegriff des Patentanspruchs 1.

### Stand der Technik

Turbolader, auch Abgasturbolader, kurz ATL, genannt, dienen der Leistungssteigerung von Verbrennungsmotoren durch Erhöhung des Treibstoffgemischdurchsatzes pro Arbeitstakt des Verbrennungsmotors.

Über das Turbinengehäuse eines Abgasturboladers geht häufig eine große Wärmemenge verloren. Moderne Verbrennungsmotoren besitzen typischerweise Katalysatoren, sogenannte Fahrzeugkatalysatoren. Die Aufgabe des Fahrzeugkatalysators ist beispielsweise die chemische Umwandlung der Verbrennungsschadstoffe Kohlenwasserstoffe (CₘHₙ), Kohlenstoffmonoxid (CO) und Stickoxide (NOₓ) in die ungiftigen Stoffe Kohlenstoffdioxid (CO₂) Wasser (H₂O) und Stickstoff (N₂) durch Oxidation beziehungsweise Reduktion. Je nach Betriebspunkt des Motors und entsprechenden Betriebsbedingungen können hohe Umwandlungsraten bis in die Nähe von 100 % erreicht werden.

Um die nötigen Betriebsbedingungen des Fahrzeugkatalysators von beispielsweise einigen hundert Grad Celsius zu erreichen, kann zumindest ein Teil der nötigen Wärme aus dem heißen Abgas entnommen werden. Geht diese Wärme aber über das Turbinengehäuse verloren, so kann die Wärme nicht an den Katalysator abgegeben werden, sondern wird beispielsweise an die Umgebung des Turbinengehäuses abgegeben. Eventuell können die Turbinengehäuse von außen mit einer Wärmedämmung umgeben werden, was allerdings trotzdem einen großen Wärmeeintrag in das Gehäusematerial des Turboladers bedeutet und das Material entsprechend belastet.

Anspruchsvolle Abgasgrenzwerte, wie sie typischerweise durch moderne Normen gefordert werden, können praktisch nur durch schnelles Aufheizen der Katalysatoren erzielt werden. Hierzu wird zusätzliche Wärmeenergie, beispielsweise zusätzlicher Kraftstoff, also die zusätzliche Verbrennung von Kraftstoff benötigt. Dieses kann aber zumindest vorübergehend zu erhöhtem Ausstoß von CO₂ , was der Idee der Reduzierung zuwider laufen kann.

Herkömmliche Turbinengehäuse sind beispielsweise aus temperaturfestem Guss gefertigt. Diese Material besitzt häufig eine große Wärmekapazität, was den Aufheizvorgang des Gehäuses und letztlich der Katalysatoren verzögern kann.

Angesichts der oben genannten Probleme und des diskutierten Stands der Technik ist es Aufgabe der vorliegenden Erfindung, einen Turbolader für Verbrennungsmotoren bereitzustellen, bei dem Wärmeabgabe des Turboladers über das Turbinengehäuse an die Umgebung effektiv reduziert werden kann.

### Beschreibung der Erfindung

Diese Aufgabe wird einem Turbolader für Verbrennungsmotoren entsprechend des Patentanspruchs 1 gelöst.

Die Erfindung stellt einen Turbolader für einen Verbrennungsmotor bereit, mit einem Turbinengehäuse, wobei das Turbinengehäuse des Turboladers an seiner Innenwand eine thermische Isolierung aufweist.

Das Turbinengehäuse des Turboladers ist also typischerweise an seiner Innenwand oder Innenseite thermisch isoliert ist. Durch die thermische Isolierung ist das heiße, die Turbine durchströmende Gas nicht mehr in direktem Kontakt mit der Innenseite des Turboladers. Hierdurch können vorteilhafterweise die umgebenden Bauteile, also Bauteile außerhalb des Turboladers, vor Wärme geschützt werden. Die Wärme kann vorteilhaft eingesetzt werden und geht nicht mehr dissipativ verloren. Das Turbinengehäuse kann zusätzlich aus einem leichteren und/oder günstigeren Material gefertigt werden, da die Anforderungen an die Wärmebelastbarkeit des Gehäuses gesenkt werden können. Die Wärme des heißen Abgases kann ferner in größerem Maße zur Erwärmung der Katalysatoren eingesetzt werden. Hierdurch können weiter Vorteile in Bezug auf Einsparungen an Kraftstoff, Senkung von CO₂-Emissionen, also Einsparung von CO₂, sowie mehr Abgassicherheit erzielt werden.

Es versteht sich, dass die thermische Isolierung typischerweise eine möglichst günstige Strömungsführung berücksichtigt, um neben den guten Isolierungseigenschaften auch die guten Strömungsführungseigenschaften zu berücksichtigen.

In dem Turbolader wie oben beschrieben kann die thermische Isolierung eine oder mehrere Schichten aufweisen.

Durch die mehrschichtige Isolierung kann die thermische Isolierung entsprechend den benötigte Temperaturen oder Temperaturfenstern abgestimmt werden. Dabei können die einzelnen Schichten unterschiedlichen Dicken und/oder Dichten und/oder Materialien und/oder Materialmischungen aufweisen. Die mehreren Schichten sind typischerweise übereinander aufgebracht. Es ist ebenso möglich, eine oder mehrere Luftschichten zwischen jeweils anderen Schichten zu haben.

In dem Turbolader wie oben beschrieben kann die Isolierung aus einer Deckschicht, beispielsweise einem metallischem Deckblech, und ein oder mehreren darunter liegenden Isoliermatten und/oder Isolierschalen bestehen.

Die ein oder mehreren Schichten können also beispielsweise unter einer Deckschicht angebracht werden. Dabei ist die Deckschicht typischerweise die am weitesten innen liegende Schicht. Es ist ebenso möglich, auch weitere, beispielsweise metallische Schichten zwischen den Isoliermatten und/oder Isolierschalen vorzusehen.

In dem Turbolader wie oben beschrieben können die Isoliermatten und/oder Isolierschalen aus einem Fasergewebe aus mineralischen Fasern, beispielsweise aus Glas und/oder Silikat und/oder Keramikfasern bestehen.

Die Isoliermatten und/oder Isolierschalen können also aus verschiedenen wärmebeständigen Materialien oder Materialgemischen aufgebaut sein. Die Isoliermatten und/oder Isolierschalen können also als Fasermatten und/oder Faserschalen ausgebildet sein.

In dem Turbolader wie oben beschrieben kann die Isolierung zumindest teilweise in das Turbinengehäuse einsetzbar sein.

Die thermische Isolierung ist dabei einsetzbar oder einbringbar bezüglich des Turbinengehäuses. Die thermische Isolierung ist damit beispielsweise vom Turbinengehäuse unabhängig. Es ist dabei ebenso möglich, die Isolierung als vorgefertigtes oder vorgeformtes Bauteil vorzusehen.

Die Erfindung stellt ferner eine Innenauskleidung für einen Turbolader wie oben beschrieben bereit, wobei die Innenauskleidung eine Isolierung umfassen kann, die aus ein oder mehrere Schichten besteht.

In der Innenauskleidung wie oben beschrieben kann die Isolierung aus einer Deckschicht, beispielsweise einem metallischem Deckblech, und ein oder mehreren darunter liegenden Isoliermatten und/oder Isolierschalen bestehen.

In der Innenauskleidung wie oben beschrieben können die Isoliermatten und/oder Isolierschalen aus einem Fasergewebe aus mineralischen Fasern, beispielsweise aus Glas und/oder Silikat und/oder Keramikfasern bestehen.

Die Innenauskleidung wie oben beschrieben kann zumindest teilweise in das Turbinengehäuse einsetzbar sein.

Es gilt also: durch die thermische Isolierung auf der Innenseite des Turbinengehäuses des Turboladers lassen sich Kraftstoffverbrauch und CO₂-Emissionen senken und somit letztlich Kosten reduzieren.

### Kurzbeschreibung der Figuren

Der Erfindungsgegenstand wird anhand der nachfolgenden Zeichnung beispielhaft erläutert.

Es zeigt:

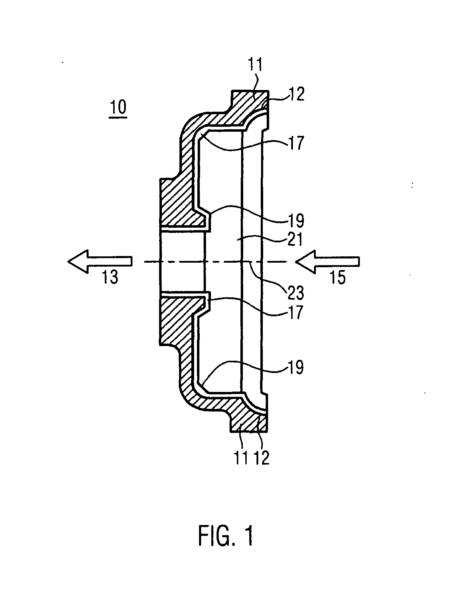

Fig. 1: eine Schnittzeichnung durch einen erfindungsgemäßen Turbolader.

### Detaillierte Beschreibung

Die Fig. 1 zeigt eine Schnittzeichnung durch einen Turbolader entsprechend der vorliegenden Erfindung.

In der Figur 1 ist ein Turbolader 10 in einem Schnitt senkrecht zur Mittelachse 23 des Turboladers gezeigt. Der Gasstrom aus heißem Gas tritt in Figur 1 auf der rechten Seite des Turboladers 10 ein, wie durch den Pfeil 15 angedeutet. Auf der linken Seite des Turboladers 10 tritt der verdichtete Gasstrom aus, wie durch den Pfeil 13 angedeutet ist.

Der Turbolader 10, wie in Figur 1 dargestellt, besitzt ein Turbinengehäuse 11 und einen Innenraum 21..Auf der Innenseite 12 des Turbinengehäuses 11 ist eine thermische Isolierung aufgebracht. Die thermische Isolierung umfasst eine oder mehrere Schichten aus Isoliermatten und/oder Isolierschalen 17. Auf den Isoliermatten und/oder Isolierschalen 17 ist ein Deckblech 19 angedeutet. Die eine Schicht 17 oder mehreren Schichten (hier nicht gezeigt) können jeweils mattenartig, gewebeartig oder netzartig ausgebildet sein.

Es versteht sich, dass in den zuvor beschriebenen Ausführungsbeispielen genannte Merkmale sich nicht auf die speziell in den Figuren gezeigten Kombinationen beschränken, sondern auch in beliebigen anderen Kombinationen möglich sein können.

## Patentansprüche

1. Turbolader (10) für einen Verbrennungsmotor, mit einem Turbinengehäuse (11), **dadurch gekennzeichnet, dass**
das Turbinengehäuse des Turboladers (10) an seiner Innenwand (12) eine thermische Isolierung (17) aufweist.

2. Turbolader (10) nach Anspruch 1, wobei die Isolierung (17) ein oder mehrere Schichten aufweist.

3. Turbolader (10) nach wenigstens einem der Ansprüche1 oder2, wobei die Isolierung (17) aus einer Deckschicht (19), beispielsweise einem metallischem Deckblech, und ein oder mehreren darunter liegenden Isoliermatten und/oder Isolierschalen besteht.

4. Turbolader (10) nach Anspruch 3, wobei die Isoliermatten und/oder Isolierschalen aus einem Fasergewebe aus mineralischen Fasern, beispielsweise aus Glas und/oder Silikat und/oder Keramikfasern bestehen.

5. Turbolader (10) nach wenigstens einem der Ansprüche 1 - 4, wobei die Isolierung (17) zumindest teilweise in das Turbinengehäuse (11) einsetzbar ist.

6. Innenauskleidung für einen Turbolader (10) gemäß Anspruch 1, wobei die Innenauskleidung eine Isolierung (17) umfasst, die aus ein oder mehrere Schichten besteht.

7. Innenauskleidung gemäß Anspruch 6, wobei die Isolierung (17) aus einer Deckschicht (19), beispielsweise einem metallischem Deckblech, und ein oder mehreren darunter liegenden Isoliermatten und/oder Isolierschalen besteht.

8. Innenauskleidung gemäß Anspruch 7, wobei die Isoliermatten und/oder Isolierschalen aus einem Fasergewebe aus mineralischen Fasern, beispielsweise aus Glas und/oder Silikat und/oder Keramikfasern bestehen.

9. Innenauskleidung nach wenigstens einem der Ansprüche 7 oder 8, wobei die Innenauskleidung zumindest teilweise in das Turbinengehäuse einsetzbar ist.
